# EUROPÄISCHE PATENTANMELDUNG

(11) **EP 3 657 643 A1**
(43) Veröffentlichungstag der Anmeldung: **27.05.2020**
(21) Anmeldenummer: 19203529.3
(22) Anmeldetag: 16.10.2019
(51) Int. Cl.: H02K 3/34, H02K 15/10, H02K 15/00

(54) **ISOLIERMITTEL FÜR EINEN STATOR EINES ELEKTROMOTORS SOWIE ZUGEHÖRIGER STATOR UND VERFAHREN ZUR HERSTELLUNG DES STATORS**

(30) Priorität: 20.11.2018 DE 102018219846
(71) Anmelder: Robert Bosch GmbH, 70442 Stuttgart (DE)
(72) Erfinder: Prem, Laszlo, 4060 Balmazujvaros (HU); Szigeti, Peter, 2330 Dunaharaszti (HU); Mateka, Balazs, 2112 Veresegyhaz (HU)

(57) **Zusammenfassung**

Die vorliegende Erfindung betrifft einen Stator eines Elektromotors und ein zugehöriges Isoliermittel (1). Das Isoliermittel (1) umfasst ein Papierelement (2), welches sich entlang einer Hochachse (24) erstreckt, wobei das Papierelement (2) einen ersten (21) Bereich oberhalb einer Trennlinie (23) und einen zweiten Bereich (22) unterhalb der Trennlinie (23) aufweist, wobei die Trennlinie (23) senkrecht auf der der Hochachse (24) steht, wobei das Papierelement (2) in dem ersten Bereich (21) derart gefaltet ist, dass mehrere Lagen des Papierelementes (2) aufeinander liegen und einen Kragen (3) bilden, welcher dazu angeordnet ist, zumindest ein Leiterelement (101) des Stators (100) zu umlaufen, wobei das Papierelement (2) in dem zweiten Bereich (22) lediglich eine einzige Lage aufweist, welche dazu angeordnet ist, das zumindest eine Leiterelement (101) des Stators (100) zu umlaufen, und wobei das Papierelement (2) zwei separate Faltungsbereiche (25, 26) aufweist, die sich jeweils entlang der Hochachse (24) erstrecken, und das Papierelement (2) in den zwei Faltungsbereichen (25, 26) so gefaltet ist, dass die Faltungsbereiche (25, 26) im gefalteten Zustand an gegenüberliegenden Seiten des Isoliermittels (1) angeordnet sind.

## Beschreibung

### Stand der Technik

Die vorliegende Erfindung betrifft ein Isoliermittel für einen Stator eines Elektromotors sowie einen zugehörigen Stator und ein Verfahren zum Herstellen des Stators.

Bei der Herstellung eines Elektromotors ist es notwendig, Leiterelemente in einen Stator des Elektromotors einzubringen. Diese Leiterelemente sind um einen Statorkern gelegt und bilden die Spulen des Stators. Dabei ist es zu verhindern, dass es zu einem Kurzschluss zwischen einem der Leiterelemente und dem Statorkern kommt. Daher ist es notwendig, ein Isoliermittel zwischen dem Statorkern und den Leiterelementen einzubringen.

Aus dem Stand der Technik sind dafür geeignete Isolierelemente bekannt. So offenbart beispielsweise die Patentschrift JP 2013 051 750 A ein Isolierelement, welches aus einem Papier gefaltet ist und einen Kragen aufweist. Das Papierelement ist dabei in einer U-Form gefaltet. Ein solches Isoliermittel ist dazu geeignet, zwischen einem Leiterelement eines Stators und einem Statorkern des Stators angeordnet zu werden.

### Offenbarung der Erfindung

Das erfindungsgemäße Isoliermittel für einen Stator eines Elektromotors umfasst ein Papierelement, welches sich entlang einer Hochachse erstreckt, wobei das Papierelement einen ersten Bereich oberhalb einer Trennlinie und einen zweiten Bereich unterhalb der Trennlinie aufweist, wobei die Trennlinie senkrecht auf der der Hochachse steht, wobei das Papierelement in dem ersten Bereich derart gefaltet ist, dass mehrere Lagen des Papierelementes aufeinander liegen und einen Kragen bilden, welcher dazu angeordnet ist, zumindest ein Leiterelement des Stators zu umlaufen, wobei das Papierelement in dem zweiten Bereich lediglich eine einzige Lage aufweist, welche dazu angeordnet ist, das zumindest eine Leiterelement des Stators zu umlaufen, und wobei das Papierelement zwei separate Faltungsbereiche aufweist, die sich jeweils entlang der Hochachse erstrecken, und das Papierelement in den zwei Faltungsbereichen so gefaltet ist, dass die Faltungsbereiche im gefalteten Zustand an gegenüberliegenden Seiten des Isoliermittels angeordnet sind.

Der erfindungsgemäße Stator umfasst das erfindungsgemäße Isoliermittel, wobei das Isoliermittel zwischen einem Statorkern des Stators und zumindest einem Leiterelement des Stators angeordnet ist, wobei das Leiterelement des Stators sich entlang der Hochachse erstreckt.

Das Isoliermittel ist somit bevorzugt ein einteiliges Element, welches lediglich aus dem Papierelement geformt ist. Das Papierelement ist dabei bevorzugt im ungefalteten Zustand ein entsprechend zugeschnittenes einzelnes Blatt Papier. Das Papier ist dabei ein Isolationspapier und weist elektrisch isolierende Eigenschaften auf. Die Hochachse und die Trennlinie sind fiktive Linien zur Unterteilung des Papierelementes. Das Papierelement ist im ersten Bereich derart gefaltet, dass mehrere Lagen des Papierelements aufeinanderliegen und einen Kragen bilden. Dabei liegen die einzelnen Lagen des Papierelementes bevorzugt unmittelbar aufeinander. Bevorzugt liegen zwei Lagen des Papierelements aufeinander, um den Kragen zu bilden. Das Papierelement umläuft bei einer Anordnung in dem Stator das zumindest eine Leiterelement des Stators. Daher ist das Papierelement derart gefaltet, dass dieses dazu geeignet ist, zumindest ein Leiterelement des Stators zu umlaufen. Das bedeutet, dass in dem ersten Bereich die mehreren Lagen des Papierelements das Leiterelement umlaufen und in dem zweiten Bereich lediglich eine einzige Lage das zumindest eine Leiterelement des Stators umläuft. Dabei werden die einzelnen Leiterelemente nicht entlang ihrer vollen Länge umlaufen, sondern lediglich in einem Teilbereich. Das Papierelement und somit das Isoliermittel weist somit aufgrund einer Faltung in dem ersten Bereich eine größere Dicke auf als in dem zweiten Bereich. Der erste Bereich bildet daher einen Kragen.

Das Papierelement weist zwei separate Faltungsbereiche auf, die es ermöglichen, das Papierelement in eine C-Form zu falten. Die beiden separaten Faltungsbereiche erstrecken sich daher jeweils entlang der Hochachse und durchlaufen sowohl den ersten als auch den zweiten Bereich. Faltungsbereiche sind dabei solche Bereiche, in denen das Papierelement gebogen oder geknickt wird. Das Papierelement ist in den beiden Faltungsbereichen so gefaltet, dass die Faltungsbereiche im gefalteten Zustand an gegenüberliegenden Seiten des Isoliermittels angeordnet sind. Das bedeutet zugleich, dass bei einer Anordnung des Isoliermittels an dem zumindest einem Leiterelement die Faltungsbereiche auf gegenüberliegenden Seiten des zumindest einen Leiterelementes des Stators angeordnet sind. Insbesondere ist bei einer Anordnung des Isoliermittels in dem Statorkern ein erster Faltungsbereich der beiden Faltungsbereiche einem inneren Umfang des Statorkerns zugewandt und ein zweiter Faltungsbereich der beiden Faltungsbereiche ist einem äußeren Umfang des Statorkerns zugewandt. Das Papierelement wird somit zu dem Isoliermittel gefaltet und umgreift das Leiterelement C-Förmig.

Der erfindungsgemäße Stator für einen Elektromotor umfasst das Isoliermittel, wobei das Isoliermittel zwischen einem Statorkern des Stators und dem zumindest einen Leiterelement des Stators angeordnet ist. Das zumindest eine Leiterelement ist dabei insbesondere zumindest ein Kupferleiter. Durch mehrere Leiterelemente werden die Windungen des Stators gebildet. Abhängig von einer Konstruktion des Stators kann eine unterschiedliche Anzahl von Leiterelementen von dem Isoliermittel umfasst werden, um diese Leiterelemente von dem Stator zu isolieren, wenn dieses den Statorkern durchläuft. Somit kann ein Kurzschluss zwischen dem zumindest einen Leiterelement und dem Statorkern verhindert werden. Die erfindungsgemäße Form des Isoliermittels durch entsprechendes Falten des Papierelementes in eine C-Form ist besonders vorteilhaft, da ein solches Isoliermittel bei einer Anordnung an dem Statorkern eine zuverlässige Isolierung zwischen dem zumindest einem Leiterelement und dem Statorkern gewährleistet. Gleichzeitig behält das Isoliermittel zuverlässig seine Form bei, wenn dieses in dem Statorkern angeordnet ist und/oder in den Statorkern eingeführt wird.

Durch den Kragen wird dabei verhindert, dass das Isolierelement bei einem Einbringen des Isoliermittels in den Statorkern zu weit in den Statorkern rutscht. Gleichzeitig wird durch den Kragen verhindert, dass das Isoliermittel verrutscht, wenn das Isoliermittel bereits in den Statorkern eingebracht ist.

Die Unteransprüche zeigen bevorzugte Weiterbildungen der Erfindung.

Bevorzugt weist das Papierelement eine Harzbeschichtung auf. Durch diese Harzbeschichtung wird eine Hitzeleitfähigkeit zwischen dem zumindest einen Leiterelement und dem Statorkern verbessert, wodurch eine bessere Wärmeabfuhr des Elektromotors erreicht wird. Gleichzeitig wird das Isoliermittel durch die Harzbeschichtung des Papierelementes in seiner Position gehalten und gegen ein Verrutschen gesichert, wenn dieses in den Statorkern eingebracht ist. So wird auch das zumindest eine Leiterelement durch das harzbeschichtete Papierelement in Position gehalten, wenn dieses in den Statorkern eingebracht ist. Gleichzeitig wird eine besonders ruhige Laufeigenschaft des zugehörigen Elektromotors ermöglicht, da die Leiterelemente durch das Isoliermittel in Position gehalten werden und sich nicht mehr unabhängig voneinander bewegen können. Die Harzbeschichtung ist dabei bevorzugt eine ausgehärtete Harzbeschichtung.

Der Statorkern weist bevorzugt mehrere spaltförmige Aufnahmen auf, die entlang eines Umfangs des Statorkerns in einer Rotationsebene angeordnet sind, und sich in einer Richtung erstrecken, die einer Rotationsachse des dem Stator zugehörigen Elektromotors entspricht, wobei in einer der spaltförmigen Aufnahmen das zumindest eine Leiterelement zusammen mit dem Isolierelement angeordnet ist. Bevorzugt ist jeder der spaltförmigen Aufnahmen jeweils ein erfindungsgemäßes Isoliermittel mit dem zugehörigen zumindest einem Leiterelement angeordnet. Die Rotationsebene ist dabei eine Ebene, die senkrecht auf der Rotationsachse steht. Die Hochachse des Papierelements des Isoliermittels ist dabei parallel zu der Rotationsachse angeordnet. Das Isoliermittel ist dabei bevorzugt so in der spaltförmigen Aufnahme angeordnet, dass einer der Faltungsbereiche im Bereich einer Öffnung der spaltförmigen Aufnahme liegt, die sich parallel zu der Rotationsachse auf einem inneren Umfang des Stators erstreckt. Das zumindest eine Leiterelement wird somit im Bereich der Öffnung des Spalts durch das Isoliermittel geschützt.

Auch ist es vorteilhaft, wenn der zweite Bereich des Isoliermittels in der spaltförmigen Aufnahme angeordnet ist und der erste Bereich des Isoliermittels außerhalb der spaltförmigen Aufnahme angeordnet ist. Das bedeutet, dass das Isoliermittel derart in den Spalt eingebracht ist, dass der zweite Bereich in die spaltförmige Aufnahme geschoben ist und der erste Bereich nicht in die spaltförmige Aufnahme eingeschoben ist, sondern bevorzugt im Bereich der Trennlinie zwischen dem ersten Bereich und dem zweiten Bereich auf einer in der Rotationsebene gelegenen Oberfläche des Statorkerns aufliegt. Dabei ist nicht zwingend der gesamte zweite Bereich des Isoliermittels in der spaltförmigen Aufnahme angeordnet. So tritt insbesondere ein Teilbereich des zweiten Bereichs auf einer Seite der spaltförmigen Aufnahme aus dem Statorkern heraus. Diese Seite des Statorkerns liegt ebenfalls in der Rotationsebene und ist entlang der spaltförmigen Aufnahme eine gegenüberliegende Seite des Statorkerns, welche der Seite des Statorkerns gegenüberliegt, an der der Kragen des Isoliermittels auf dem Statorkern aufliegt. Es wird in jeder der spaltförmigen Aufnahmen durch jeweils ein Isoliermittel eine dünne Isolationsschicht zwischen dem zumindest einen Leiterelement und dem Statorkern geschaffen. Der Stator weist somit besonders günstige magnetische Eigenschaften auf.

Auch ist es vorteilhaft, wenn eine Dimension des zumindest einen Leiterelements und eine Dicke des Isoliermittels in dem zweiten Bereich so gewählt ist, dass diese zusammen einen Außenumfang aufweisen, der einem Innenumfang der spaltförmigen Aufnahme entspricht. Das bedeutet mit anderen Worten, dass das Isoliermittel zusammen mit dem zumindest einen elektrischen Leiter die spaltförmige Aufnahme vollständig ausfüllt. Da durch den Kragen die Dicke des Isoliermittels in dem ersten Bereich größer ist als in dem zweiten Bereich kann das Isoliermittel nicht in die spaltförmige Aufnahme rutschen, da diese bereits vollständig gefüllt ist und eine zusätzliche Lage des Papierelementes nicht in die spaltförmige Aufnahme passt. Es wird somit verhindert, dass das Isoliermittel in die spaltförmige Aufnahme rutscht. Die Dimension des zumindest einen Leiterelementes ist hierbei eine Dimension eines Querschnittes durch das Leiterelement in der Rotationsebene.

Auch ist es vorteilhaft, wenn das zumindest eine Leiterelement zumindest einen lackierten Kupferleiter umfasst. Dadurch wird eine zusätzliche Isolation für das zumindest eine Leiterelement geschaffen, wodurch dieses auch in den Bereichen isoliert ist, in denen das zumindest eine Leiterelement nicht von dem Isoliermittel umfasst ist. Gleichzeitig wird eine besonders starke Verbindung zwischen dem zumindest einen Leiterelement und dem Isoliermittel geschaffen, insbesondere, wenn dieses eine Harzbeschichtung aufweist. Es wird somit ein Verrutschen des Isolierelementes gegenüber dem zumindest einen Leiterelement unterbunden. Auch wird ein Kurzschluss zwischen einzelnen Leiterelementen vermieden, wenn das Isoliermittel mehrere Leiterelemente umläuft.

Die vorliegende Erfindung betrifft ferner ein zugehöriges Verfahren zum Herstellen des erfindungsgemäßen Stators. Dabei wird das erfindungsgemäße Isoliermittel um das zumindest eine Leiterelement angeordnet und dann das zumindest eine Leiterelement zusammen mit dem um das zumindest eine Leiterelement angeordneten zweiten Bereich des Isoliermittels entlang der Hochachse in die spaltförmige Aufnahme des Statorkerns gepresst. Dabei wird das Isoliermittel mit dem zweiten Bereich zuerst in die spaltförmige Aufnahme eingeführt. Weist das Papierelement dabei die Harzbeschichtung auf, so gleitet das Isoliermittel zusammen mit dem zumindest einen Leiterelement besonders zuverlässig in die dafür vorgesehene Aufnahme des Statorkerns, ohne dass das Isoliermittel von seiner vorgesehenen Position von dem zumindest einen Leiterelement rutscht.

Bevorzugt weist das Papierelement eine Harzbeschichtung auf und das Verfahren umfasst ein Aushärten der Harzbeschichtung, wenn das Isoliermittel in der spaltförmigen Aufnahme des Statorkerns angeordnet ist, wobei das Aushärten insbesondere zusammen mit einem Verkleben des zumindest einen Leiterelements mit dem Statorkern erfolgt. Das Verkleben des Leiterelements umfasst dabei insbesondere ein Aufbringen eines zusätzlichen Klebstoffes, welcher bevorzugt in einem heißen Zustand aufgebracht wird. Erfolgt das Aushärten der Harzbeschichtung erst dann, wenn das Isoliermittel bereits in der spaltförmigen Aufnahme angeordnet ist, so passt sich das Isoliermittel besonders gut an die spaltförmige Aufnahme an und ein Verrutschen des Leiterelementes und/oder des Isoliermittels wird besonders effizient unterbunden.

Weiter bevorzugt weist das Papierelement eine Harzbeschichtung auf und das Verfahren umfasst ein Aushärten der Harzbeschichtung, bevor das Isoliermittel in den Statorkern gepresst wird. Dadurch wird das Isoliermittel während dem Einbringen in die dafür vorgesehene Aufnahme des Statorkerns besonders zuverlässig an dem zumindest einen Leitelement gehalten und kann nicht von diesem abfallen.

Ein Motor, welcher den erfindungsgemäßen Stator mit dem erfindungsgemäßen Isoliermittel umfasst, ist ebenfalls vorteilhaft.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Isoliermittel für einen Stator eines Elektromotors gemäß einer Ausführungsform der Erfindung in einem ungefalteten Zustand,
- Figur 2a - 2c: eine Darstellung des erfindungsgemäßen Isoliermittels gemäß einer Ausführungsform der Erfindung in unterschiedlichen Ansichten,
- Figur 3: ein Statorkern eines erfindungsgemäßen Stators gemäß einer Ausführungsform der Erfindung,
- Figur 4: eine seitliche Ansicht des Stators gemäß der Ausführungsform der Erfindung,
- Figur 5: eine Ansicht des erfindungsgemäßen Isoliermittels, wenn dieses in dem Statorkern angeordnet ist, und
- Figur 6: ein Ablaufdiagramm eines erfindungsgemäßen Verfahrens zum Herstellen eines erfindungsgemäßen Stators

### Ausführungsformen der Erfindung

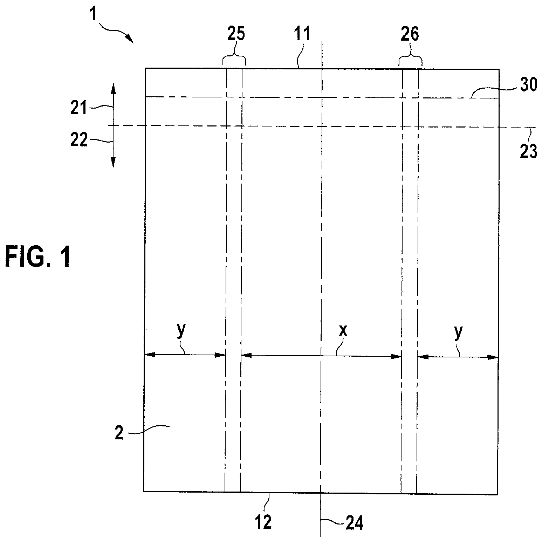

Figur 1 zeigt ein Papierelement 2 aus dem ein Isoliermittel 1 für einen Stator 100 eines Elektromotors geformt wird. Das Papierelement 2 ist dabei ein rechteckiges Blatt Isolierpapier, welches elektrisch isolierende Eigenschaften aufweist. Das Papierelement 2 erstreckt sich entlang einer Hochachse 24, wobei sich die Hochachse 24 von einer unteren Seite 12 zu einer oberen Seite 11 des Papierelementes 2 erstreckt. Die Hochachse 24 verläuft dabei parallel zu einer Kante des Papierelements 2. Senkrecht auf der Hochachse 24 steht eine Trennlinie 23, welche das Papierelement 2 in einen ersten Bereich 21 und einen zweiten Bereich 22 unterteilt, wobei der erste Bereich 21 in Figur 1 oberhalb der Trennlinie 23 liegt und der zweite Bereich in Figur 1 unterhalb der Trennlinie 23 liegt. Um das Isoliermittel 1 für den Stator 100 des Elektromotors zu formen, wird das Papierelement 2 gefaltet.

Das Papierelement 2 ist in seinem ungefalteten Zustand jedoch nicht zwingend ein rechteckiges Blatt. So weist das Papierelement 2 beispielsweise ausgeschnittene Bereiche auf, die es ermöglichen, dass das Papierelement 2 und somit das Isoliermittel 1 sich in seinem gefalteten Zustand in dem zweiten Bereich verjüngt.

Das Papierelement 2 wird in dem ersten Bereich derart gefaltet, dass mehrere Lagen des Papierelementes 2 aufeinanderliegen und einen Kragen 3 bilden. So ist der erste Bereich 21 des Papierelementes durch eine erste Faltlinie 30 unterteilt, welche parallel zu der Trennlinie 23 liegt und den ersten Bereich in zwei gleich große Abschnitte unterteilt. Wird das Papierelement 2 entlang der Faltlinie 30 gefaltet, so liegen zwei Teile des ersten Bereichs des Papierelements aufeinander und bilden im Folgenden den Kragen 3 des Isoliermittels 1.

Das Papierelement weist ferner zwei separate Faltungsbereiche 25, 26 auf, welche einen ersten Faltungsbereich 25 und einen zweiten Faltungsbereich 26 umfassen. Sowohl der erste Faltungsbereich 25, als auch der zweite Faltungsbereich 26 erstreckt sich parallel zu der Hochachse 24 und durchläuft damit sowohl den ersten Bereich 21, als auch den zweiten Bereich 22 des Papierelements. Der erste Faltungsbereich 25 und der zweite Faltungsbereich 26 verlaufen parallel zueinander. Dabei ist der Abstand zwischen dem ersten Faltungsbereich und dem zweiten Faltungsbereich 26 so gewählt, dass ein kürzester Abstand x zwischen dem ersten Faltungsbereich 25 und dem zweiten Faltungsbereich 26 im Wesentlichen einem kürzesten Abstand y zwischen dem ersten Faltungsbereich 25 und der nächstgelegenen parallel verlaufenden Kante des Papierelements 2 plus dem Abstand y zwischen dem zweiten Faltungsbereich 26 und der nächstgelegenen parallel verlaufenden Kante des Papierelements 2 entspricht. Für die Abstände x und y gilt somit im Wesentlichen, dass der Abstand x gleich dem doppelten Abstand y ist. Es ergibt sich somit, dass die beiden Kanten des Papierelements 2, welche parallel zu den Faltungsbereichen 25, 26 verlaufen, einander annähernd berühren, wenn das Papierelement 2 zu dem Isoliermittel 1 geformt ist. Jeder der Faltungsbereich 25, 26 umfasst dabei zumindest eine Faltlinie. So weist das jeder der Faltungsbereich 25, 26 des in Figur 1 gezeigten Papierelementes 2 jeweils zwei parallel zueinander verlaufende Faltlinien auf.

Das Papierelement 2 ist in den beiden Faltungsbereichen 25, 26 so gefaltet, dass die Faltungsbereiche 25, 26 im gefalteten Zustand an gegenüberliegenden Seiten des Isoliermittels angeordnet sind. Dazu umfasst jeder der beiden separaten Faltungsbereiche 25, 26 bevorzugt mehrere einzelne Faltlinien, die parallel zu der Hochachse 24 verlaufen. Das Papierelement 2 wird somit entlang der Trennlinie 23 zu einem C gefaltet. Betrachtet man die Trennlinie 23 als eine fiktive Linie auf dem Papierelement 2, so wird durch die Trennlinie 23 im gefalteten Zustand des Papierelements 2 eine Ebene definiert, in der das Papierelement 2 so gefaltet ist, dass die beiden parallel zu den beiden Faltungsbereichen 25, 26 verlaufenden Kanten des Papierelements 2 einander berühren.

Dadurch, dass das Papierelement 2 in dem zweiten Bereich 22 keine weiteren Faltlinien aufweist, weist das Papierelement 2 in dem zweiten Bereich 22 lediglich eine einzelne Lage auf, welche dazu geeignet ist, zumindest ein Leiterelement 101 des Stators 100 zu umlaufen.

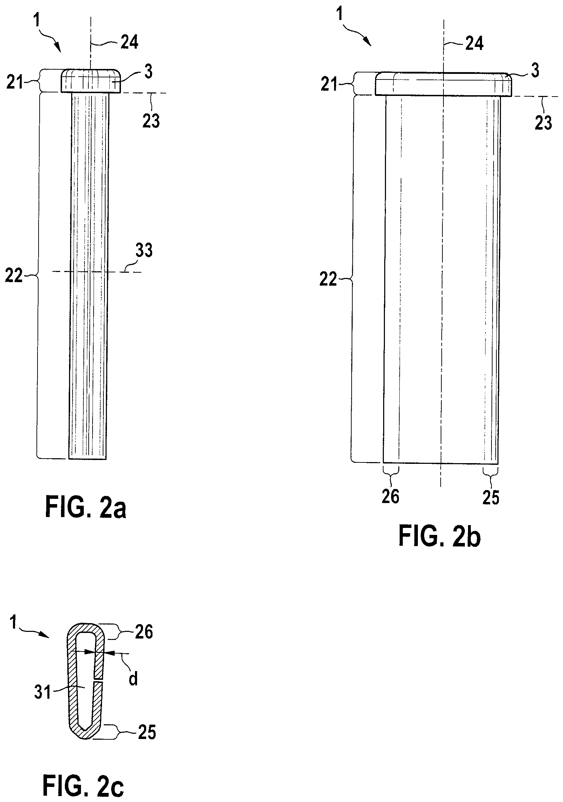

Die Figuren 2a, 2b und 2c zeigen das Isoliermittel 1 in unterschiedlichen Ansichten. Das Isoliermittel 1 ist dabei das Papierelement 2 im gefalteten Zustand. Es zeigt Figur 2a eine erste Ansicht, Figur 2b eine zweite Ansicht und Figur 2c eine dritte Ansicht des Isoliermittels 1. Es ist aus den Figuren 2a und 2b erkenntlich, dass das Isoliermittel 1 in dem ersten Bereich 21 den Kragen 3 aufweist, in dem mehrere Lagen des Papierelementes 2 aufeinanderliegen. Dieser Kragen 3 erstreckt sich oberhalb der Trennlinie 23. In dem zweiten Bereich 22 weist das Isoliermittel 1 lediglich eine einzelne Lage des Papierelementes 2 auf, wobei durch diese einzelne Lage des Papierelements 2 ein Hohlraum 31 umlaufen wird, welcher sich entlang der Hochachse 24 erstreckt. Der Hohlraum 31 ist dazu geeignet, das zumindest eine Leiterelement 101 des Stators 100 aufzunehmen. Dies ist aus Figur 2c ersichtlich, welche ein Schnittbild entlang einer Schnittachse 33 durch das Isoliermittel 1 zeigt.

Das Papierelement 2 weist eine Harzbeschichtung auf. Das Harz für die Harzbeschichtung ist dabei bevorzugt so gewählt, dass dieses thermisch ausgehärtet werden kann.

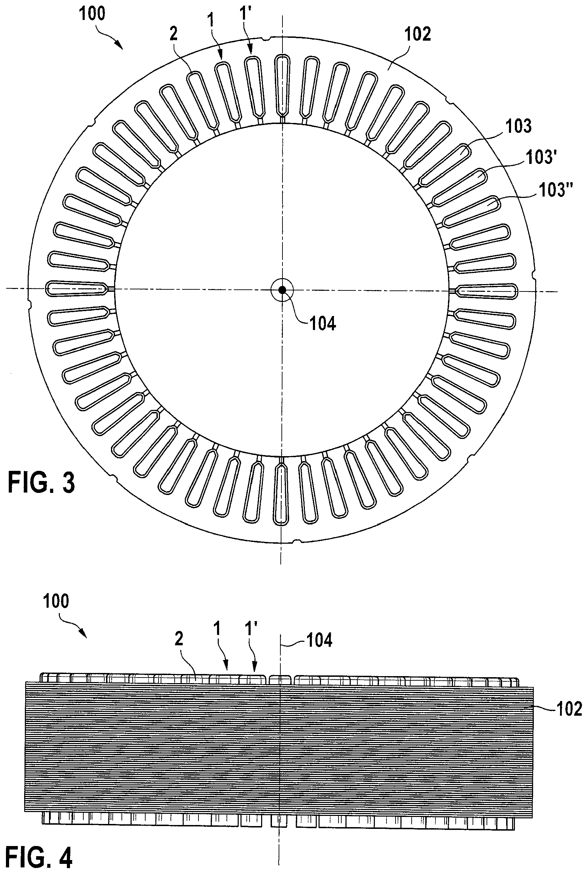

Figur 3 zeigt einen Statorkern 102 des Stators 100. Der Statorkern 102 ist dabei ein Metallkern. In Figur 3 ist der Statorkern 102 in einer Draufsicht abgebildet, wobei die Zeichenebene der Figur 3 einer Rotationsebene entspricht, wobei die Rotationsebene eine Ebene ist, die senkrecht zu einer Rotationsachse 104 steht, welche eine Rotationsachse 104 des dem zu Stator 100 zugehörigen Elektromotors ist. Der Statorkern 102 weist eine Ringform auf, wobei ein Rotor des Elektromotors in den durch den Statorkern 102 gebildeten Ring angeordnet wird. Der Statorkern 102 weist eine Vielzahl spaltförmiger Aufnahmen 103, 103', 103" auf, die sich parallel zu der Rotationsachse 104 erstrecken. Die spaltförmigen Aufnahmen 103, 103', 103" sind entlang eines Umfangs des Statorkerns 102 in der Rotationsebene angeordnet. Dabei weisen die spaltförmigen Aufnahmen 103, 103', 103" jeweils eine Öffnung auf, die auf einem inneren Umfang des Statorkern 102 gelegen ist.

Die spaltförmigen Aufnahmen 103, 103', 103" dienen dazu, die Windungen von Statorspulen des Stators 100 aufzunehmen. Die Windungen der Statorspulen werden dabei durch Leiterelemente 101 gebildet, wobei abhängig von einer Ausführung des Stators 100 eine unterschiedliche Anzahl von Leiterelementen durch jede einzelne der spaltförmigen Aufnahmen 103, 103', 103" geführt ist. Bei einem erfindungsgemäßen Stator 100 werden alle Leiterelemente 101, die durch eine der spaltförmigen Aufnahmen 103, 103', 103" geführt werden, in der jeweiligen spaltförmigen Aufnahme 103, 103', 103" von dem Isoliermittel 1 umfasst. Es ist somit in jeder der in Figur 3 gezeigten spaltförmigen Aufnahmen 103, 103', 103" jeweils ein Isoliermittel 1 mit den dazugehörigen Leiterelementen 101 angeordnet. Die unterschiedlichen Leiterelemente 101 unterschiedlicher spaltförmiger Aufnahmen 103, 103', 103" sind zu Windungen der Statorspulen gekoppelt.

Figur 4 zeigt den aus Figur 3 bekannten Statorkern 102 in einer zweiten Ansicht. Dabei steht der in Figur 4 gezeigten Ansicht die Rotationsebene senkrecht zu der Zeichenebene. Bei der in Figur 4 gezeigten Darstellung sind die Isoliermittel 1,1' in den spaltförmigen Aufnahmen 103 angeordnet. Dabei liegen die Kragen 2 der Isoliermittel 1 auf einer in Figur 4 oben gelegenen Oberfläche des Statorkerns 102 auf.

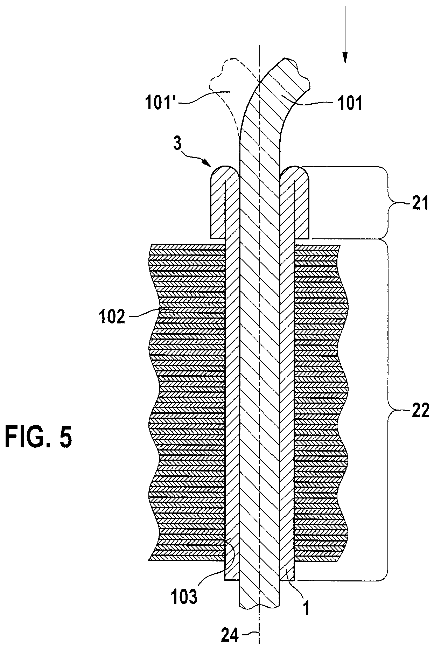

Figur 5 zeigt die Anordnung des Isoliermittels 1 in dem Statorkern 102 in einer Detailansicht. So ist in Figur 5 ein Schnittbild durch den Statorkern 101 gezeigt. Es ist ersichtlich, dass das Isoliermittel 1 zusammen mit dem zumindest einen Leiterelement 101 in der spaltförmigen Aufnahme 103 angeordnet ist. Dabei ist der zweite Bereich 22 des Isoliermittels 1 zwischen dem Statorkern 102 und dem zumindest einen Leiterelement 101 des Stators 100 angeordnet. Das Leiterelement 101 des Stators 100 erstreckt sich dabei entlang der Hochachse 24. Dies ist so zu verstehen, dass eine Stromflussrichtung durch das Leiterelement 101 parallel zu der Hochachse 24 liegt.

Es ist dabei aus Figur 5 ersichtlich, dass lediglich der zweite Bereich 22 des Isoliermittels 1 in der spaltförmigen Aufnahme 103 angeordnet ist und der erste Bereich 21 des Isoliermittels 1 außerhalb der spaltförmigen Aufnahme 103 angeordnet ist. Das Isoliermittel 1 kann nicht in die spaltförmige Aufnahme 103 rutschen, da das Isoliermittel 1 in dem ersten Bereich 21 eine größere Dicke aufweist, als in dem zweiten Bereich 22. Das zumindest eine Leiterelement 101 weist in dem Bereich des Isoliermittels 1 eine konstante Dicke auf. Es ist somit eine Dimension des zumindest einen Leiterelements 101 und eine Dicke des Isoliermittels 1 in dem zweiten Bereich so gewählt, dass diese zusammen einen Außenumfang aufweisen, der einem Innenumfang der spaltförmigen Aufnahme 103 entspricht. Das bedeutet, dass das Leiterelement 101 zusammen mit dem zweiten Bereich 22 des Isoliermittels 1 die spaltförmige Aufnahme vollständig auffüllt.

Es ist ferner aus Figur 5 ersichtlich, dass das Leiterelement 101 das Isolierelement 1 sowohl unterhalb des Statorkerns 102, als auch oberhalb des Statorkerns 102 verlässt, wobei das Leiterelement 101 entlang der Hochachse 24 aus dem Isoliermittel 1 heraus verläuft. Damit auch in diesem Bereich eine Isolierung des zumindest einen Leiterelements 101 gewährleistet ist, ist jedes Leiterelement des zumindest einen Leiterelements 101 ein lackierter Kupferleiter. Auch verlaufen bei dem in Figur 5 gezeigten Beispiel zwei parallel verlaufende Leiterelement 101, 101' durch die spaltförmigen Aufnahme 103 und werden zusammen von dem Isolierelement 1 umfasst. Durch die Lackierung wird sichergestellt, dass es zu keinem Kurzschluss zwischen den zwei parallel verlaufenden Leiterelementen 101, 101' innerhalb des Isolierelementes 1 kommt.

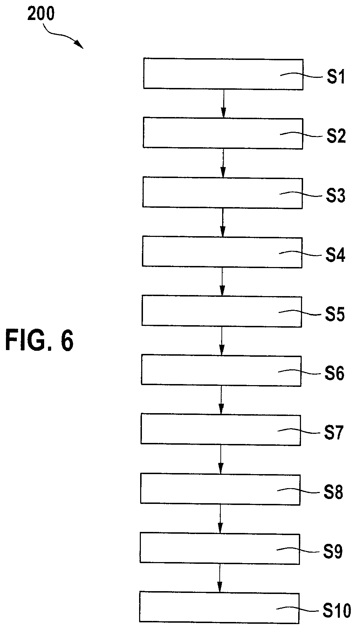

Figur 6 zeigt ein Ablaufdiagramm eines erfindungsgemäßen Verfahrens 200 zum Herstellen des Stators 100. Das Verfahren 200 umfasst dabei einen ersten bis zehnten Schritt S1 bis S10.

In dem ersten Schritt S1 wird das Rohmaterial für das Isoliermittel 1 bereitgestellt, also das Papier für das Papierelement 2 bereitgestellt.

In dem zweiten Schritt S2 wird die erste Faltlinie 30 des Kragens 2 in den ersten Bereich 21 des Papierelementes 2 eingebracht.

In einem dritten Schritt S3 erfolgt ein Falten des Kragens 2, wobei das Papierelement 2 entlang der Faltlinie 30 gefaltet wird.

In dem vierten Schritt S4 erfolgt ein Zurechtschneiden des Papierelementes 2 auf seine endgültige Form.

In dem fünften Schritt S5 erfolgt ein Einbringen der Faltkanten der separaten Faltungsbereiche 25, 26.

In dem sechsten Schritt S6 erfolgt ein Falten des Papierelementes 2 in eine U-Form. So wird das Papierelement 2 entlang jeweils einer der Faltlinien des ersten Faltungsbereich 25 und des zweiten Faltungsbereich 26 gefaltet.

In einem siebten Schritt S7 erfolgt ein Falten des Papierelementes in seine endgültige C-Form. Dazu wird das Papierelement 2 an den verbleibenden Faltungslinien der beiden separaten Faltungsbereiche 25, 26 gefaltet.

In dem achten Schritt S8 wird das Isoliermittel 1 um das zumindest eine Leiterelement 101 gelegt, beispielsweise auf dieses aufgeschoben.

In dem achten Schritt S8 werden typischerweise alle Leiterelemente 101 des Stators 100, welche durch eine der spaltförmigen Aufnahmen 103, 103', 103" verlaufen, mit einem zugehörigen Isoliermittel 1 bestückt.

In dem neunten Schritt S9 wird das Isoliermittel 1 zusammen mit dem zumindest einem Leiterelement 101 in den Statorkern 102 eingepresst. Dabei wird das Isoliermittel 1 derart in den Statorkern 102 eingeführt, dass dieses mit dem zweiten Bereich zuerst zusammen mit dem zumindest einem Leiterelement 101 in eine der mehreren spaltförmigen Aufnahmen 103 gleitet. Die Einpressrichtung ist dabei in Figur 5 als ein Pfeil dargestellt. Das Leiterelement 101 wird dabei so weit in den Statorkern 102 eingeführt, bis dieses sich an seiner endgültigen Position befindet. Das Isoliermittel 1 gleitet zusammen mit dem zumindest einem Leiterelement 101 in die spaltförmige Aufnahme 103, bis das Isoliermittel 1 mit dem Kragen 3 an den Statorkern 102 anstößt. Das Isoliermittel 1 kann somit nicht zu weit in die spaltförmige Aufnahme 103 rutschen.

In dem zehnten Schritt S10 erfolgt ein Aushärten oder Aktivieren der Harzbeschichtung des Papierelementes 2. Dies erfolgt bevorzugt zusammen mit einem Verkleben des zumindest einen Leiterelements 101 mit dem Statorkern 102. Dabei wird ein erhitzter Klebstoff auf den Statorkern 102 und die dem Statorkern zugehörigen Leiterelemente 101 aufgebracht, wodurch der Statorkern 102 erhitzt wird. Dies führt zu einer Aktivierung der Harzbeschichtung, wodurch diese sich in die spaltförmige Aufnahme 103 einpasst und mit dem zumindest einen Leiterelement 101 und dem Statorkern 102 verklebt. Das zumindest eine Leiterelement 101 kann nun nicht mehr aus der spaltförmigen Aufnahme 103 rutschen, sondern ist großflächig mit dieser verbunden. Dabei dienst die gesamte Innenfläche der spaltförmigen Aufnahme 103 als eine Verbindungsfläche zwischen dem Isoliermittel 1 und dem Statorkern 102.

In alternativen Ausführungsformen des Verfahrens 200 erfolgt das Aushärten der Harzbeschichtung bereits vor dem Einführen des Isoliermittels 1 und des zumindest einen Leiterelementes 101 in die spaltförmige Aufnahme 103. Dadurch ist das Isoliermittel 1 bereits vor dem Einführen in die spaltförmige Aufnahme 103 mit dem zugehörigen zumindest einem Leiterelement 101 verbunden. In diesem Fall ist ein Aushärten der Harzbeschichtung bei einem Verkleben des zumindest einen Leiterelementes nicht mehr notwendig, wobei auch das Verkleben des Leiterelementes als optional anzusehen ist.

Das Papierelement 2 umfasst entweder eine einseitige Harzbeschichtung oder eine zweiseitige Harzbeschichtung.

Nebst obenstehender Offenbarung wird explizit auf die Offenbarung der Figuren 1 bis 6 hingewiesen.

## Patentansprüche

1. Isoliermittel (1) für einen Stator (100) eines Elektromotors, umfassend:
• ein Papierelement (2), welches sich entlang einer Hochachse (24) erstreckt, wobei das Papierelement (2) einen ersten (21) Bereich oberhalb einer Trennlinie (23) und einen zweiten Bereich (22) unterhalb der Trennlinie (23) aufweist, wobei die Trennlinie (23) senkrecht auf der der Hochachse (24) steht,
• wobei das Papierelement (2) in dem ersten Bereich (21) derart gefaltet ist, dass mehrere Lagen des Papierelementes (2) aufeinanderliegen und einen Kragen (3) bilden, welcher dazu angeordnet ist, zumindest ein Leiterelement (101) des Stators (100) zu umlaufen,
• wobei das Papierelement (2) in dem zweiten Bereich (22) lediglich eine einzige Lage aufweist, welche dazu angeordnet ist, das zumindest eine Leiterelement (101) des Stators (100) zu umlaufen, und
• wobei das Papierelement (2) zwei separate Faltungsbereiche (25, 26) aufweist, die sich jeweils entlang der Hochachse (24) erstrecken, und das Papierelement (2) in den zwei Faltungsbereichen (25, 26) so gefaltet ist, dass die Faltungsbereiche (25, 26) im gefalteten Zustand an gegenüberliegenden Seiten des Isoliermittels (1) angeordnet sind.

2. Isoliermittel (1) gemäß Anspruch 1, **dadurch gekennzeichnet, dass** das Papierelement (2) eine Harz-Beschichtung aufweist.

3. Stator (100) für einen Elektromotor, umfassend das Isoliermittel (1) gemäß einem der voranstehenden Ansprüche, wobei das Isoliermittel (1) zwischen einem Statorkern (102) des Stators (100) und dem zumindest einen Leiterelement (101) des Stators (100) angeordnet ist, wobei das zumindest eine Leiterelement (101) des Stators (100) sich entlang der Hochachse (24) erstreckt.

4. Stator (100) gemäß Anspruch 3, **dadurch gekennzeichnet, dass** der Statorkern (102) mehrere spaltförmige Aufnahmen (103) aufweist, die entlang eines Umfangs des Statorkerns (102) in einer Rotationsebene angeordnet sind, und sich in einer Richtung erstrecken, die einer Rotationsachse (104) des dem Stator (100) zugehörigen Elektromotors entspricht, wobei in einer der spaltförmigen Aufnahmen (103) das zumindest eine Leiterelement (101) zusammen mit dem Isoliermittel (1) angeordnet ist.

5. Stator (100) gemäß Anspruch 4, **dadurch gekennzeichnet, dass** der zweite Bereich (22) des Isoliermittels (1) in der spaltförmigen Aufnahme (103) angeordnet ist und der erste Bereich (21) des Isoliermittels (1) außerhalb der spaltförmigen Aufnahme (103) angeordnet ist.

6. Stator (100) gemäß Anspruch 4 oder 5, **dadurch gekennzeichnet, dass** eine Dimension des zumindest einen Leiterelements (101) und eine Dicke des Isoliermittels (1) in dem zweiten Bereich (22) so gewählt ist, dass diese zusammen einen Außenumfang aufweisen, der einem Innenumfang der spaltförmigen Aufnahme (103) entspricht.

7. Stator (100) gemäß einem der Ansprüche 4 bis 6, **dadurch gekennzeichnet, dass** das zumindest eine Leiterelement (101) zumindest einen lackierten Kupferleiter umfasst.

8. Verfahren (200) zum Herstellen eines Stators (100) gemäß einem der Ansprüche 4 bis 7, **dadurch gekennzeichnet, dass** das Isoliermittel (1) um das zumindest eine Leiterelement (101) angeordnet wird und dann das zumindest eine Leiterelement (101) zusammen mit dem um das zumindest eine Leiterelement (101) angeordneten zweiten Bereich (22) des Isoliermittels (1) entlang der Hochachse (24) in die spaltförmige Aufnahme (103) des Statorkerns (102) gepresst wird.

9. Verfahren gemäß Anspruch 8, wobei das Papierelement (2) eine Harz-Beschichtung aufweist und das Verfahren ein Aushärten der Harz-Beschichtung umfasst, wenn das Isoliermittel (1) in der spaltförmigen Aufnahme (103) des Statorkerns (102) angeordnet ist, wobei das Aushärten insbesondere zusammen mit einem Verkleben des zumindest einen Leiterelementes (101) mit dem Statorkern (102) erfolgt.

10. Verfahren gemäß Anspruch 8, wobei das Papierelement (2) eine Harz-Beschichtung aufweist und das Verfahren ein Aushärten der Harz-Beschichtung umfasst, bevor das Isoliermittel (1) in den Statorkern (102) gepresst wird.
